Europäisches Patentamt

European Patent Office

Office européen des brevets

(11) Veröffentlichungsnummer: **0 163 194**
A2

# EUROPÄISCHE PATENTANMELDUNG

(21) Anmeldenummer: 85105895.8

(22) Anmeldetag: 14.05.85

(51) Int. Cl.⁴: **B 60 J 1/02**

(30) Priorität: 28.05.84 DE 3419894

(43) Veröffentlichungstag der Anmeldung:
04.12.85 Patentblatt 85/49

(84) Benannte Vertragsstaaten:
DE FR GB IT

(71) Anmelder: METZELER KAUTSCHUK GMBH
Gneisenaustrasse 15
D-8000 München 50(DE)

(72) Erfinder: Caspari, Horst
Poststrasse 50
D-6800 Mannheim 41(DE)

(72) Erfinder: Schröter, Klaus
Agnesstrasse 24
D-6520 Worms(DE)

(74) Vertreter: Michelis, Theodor, Dipl.-Ing.
Gneisenaustrasse 15
D-8000 München 50(DE)

(54) Verfahren zum Konfektionieren einer Glasscheibe auf einem Rahmen aus elastomerem Material.

(57) Zum dauerhaften Konfektionieren einer Glasscheibe im Flush-Glasing-Verfahren auf die Außenseite eines Rahmens aus elastomerem Material werden erfindungsgemäß nacheinander auf den Scheibenrand ein vulkanisierbarer Primer sowie ein weiteres vulkanisierbares Bindemittel aufgetragen und nach Aufrauhen des Glas-Nutausschnittes des vorvulkanisierten Elastomer-Rahmens eine vulkanisierbare Kleberlösung auf diesen Nutausschnitt aufgebracht, Rahmen und Glasscheibe paßgenau zusammengefügt und unter erhöhtem Druck ausvulkanisiert.

FIG.3

METZELER KAUTSCHUK GMBH    München, den 8.5.1985
Unser Zeichen: MK 344 P 84 EP


Verfahren zum Konfektionieren einer Glasscheibe
auf einem Rahmen aus elastomerem Material

Die Erfindung betrifft ein Verfahren zum dauerhaften
Konfektionieren einer Glasscheibe, insbesondere einer
Front- oder Heckscheibe für Kraftfahrzeuge, auf die
Außenseite eines Rahmens aus einem elastomeren Material.

Im Bestreben, den Luftwiderstand von Kraftfahrzeugen zu
minimieren, ist es bekannt, die entsprechenden Scheiben,
wie insbesondere die großen Front- und Heckscheiben,
direkt in das Kraftfahrzeug einzukleben, wobei die
Scheiben meist nur noch von einem sehr schmalen Rand
eines herkömmlichen Gummiprofils umgeben sind. Ein derartiges direktes Einkleben der Scheiben ist jedoch mit
gewissen Schwierigkeiten des Handlings bezüglich der
genauen Halterung und der erforderlichen Mindestzeitspanne zum Aushärten des verwendeten Klebers verbunden.

Eine weitere Möglichkeit des sogenannten Flush-Glasings
besteht darin, die Scheiben mit einem vorher an diese
angespritzten Rahmen als integrierte Baueinheit in das
Kraftfahrzeug einzusetzen. Ein direktes Anspritzen des
Rahmens an die Scheibe - wie bei kleinen Dreiecksfenstern üblich - ist jedoch wegen der üblichen Größe derartiger Front- und Heckscheiben rein fertigungstechnisch nur mit sehr großem Aufwand möglich.

Der Erfindung liegt demgegenüber die Aufgabe zugrunde,
ein Verfahren anzugeben, mit dem auch derart große
Glasscheiben auf einen Rahmen aus herkömmlichem elastomeren Material aufkonfektioniert werden können, wobei der Rahmen gegenüber der Scheibenoberfläche keine hervorstehenden oder von außen umfassenden Bereiche aufweisen soll, sondern ein praktisch stufenloser Übergang gegeben ist.

Zur Lösung dieser Aufgabe sind erfindungsgemäß die folgenden Verfahrensschritte vorgesehen:

a) Reinigen des Umfangsrandes der Glasscheibe mit einem fettlösenden Lösungsmittel;

b) Aufbringen eines vulkanisierbaren Primers auf den Scheibenrand;

c) Aufbringen eines vulkanisierbaren Bindemittels auf den Scheibenrand;

d) Aufrauhen des Glas-Nutausschnittes des vorvulkanisierten Elastomer-Rahmens;

e) Aufbringen einer vulkanisierbaren Kleberlösung auf dem Glas-Nutausschnitt;

f) passgenaues Zusammenfügen von Rahmen und Glasscheibe;

g) Ausvulkanisieren des Rahmens mit eingesetzter Glasscheibe unter erhöhtem Druck.

Zweckmäßigerweise beträgt dieser erhöhte Druck etwa 5 - 6 bar, wobei Rahmen und Glasscheibe zusätzlich gegeneinander verspannt werden.

Anhand einer schematischen Zeichnung ist das Verfahren.

zur Konfektionierung derartiger Front- und Heckscheiben nach der Erfindung näher erläutert. Dabei zeigen:

Fig. 1        eine Aufsicht auf einen Rahmen mit aufgesetzter Scheibe,

Fig. 2        einen entsprechenden Querschnitt

Fig. 3        ein Prinzipbild der Verfahrensschritte der Vorbehandlung von Rahmen und Glasscheibe,

Fig. 4        die Möglichkeit eines Toleranzausgleichs

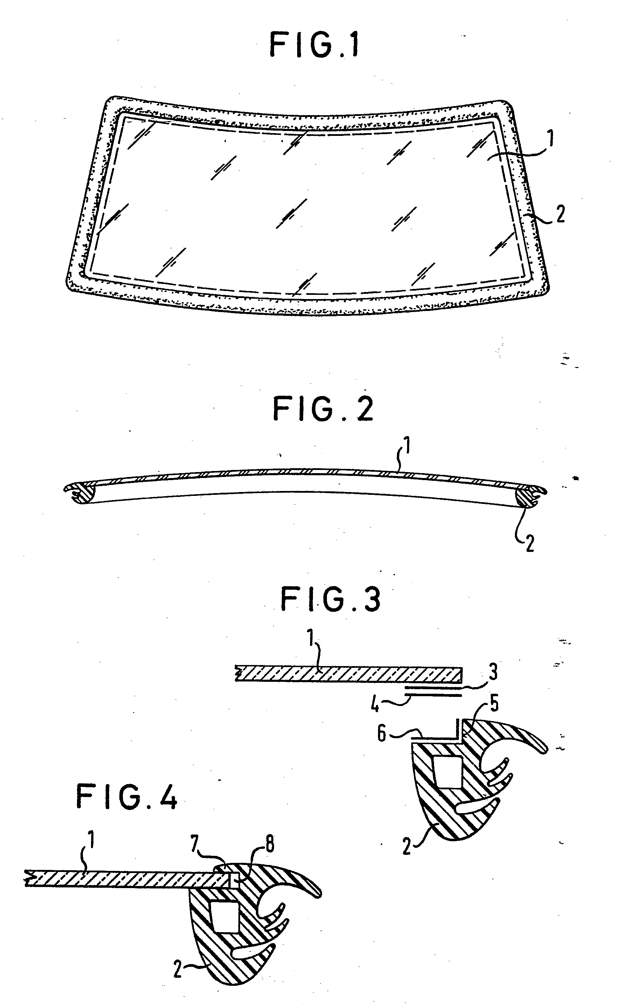

Wie aus Fig. 1 und 2 zu ersehen ist, ist die meist leicht gewölbte Scheibe 1 allseitig von einem Rahmen 2 aus elastomerem Material, insbesondere EPDM umgeben, wobei - wie insbesondere aus Fig. 2 zu ersehen ist - die Oberkante des Rahmens 2 und die Oberseite der Scheibe 1 glatt abschließen und miteinander fluchten. Das bedeutet, daß die Scheibe praktisch nur in einer Aussparung des Rahmens 2 eingesetzt werden kann und dort mit dem Rahmen fest verbunden werden muß.

Wie dazu aus dem Prinzipbild nach Fig. 3 zu ersehen ist, wird zunächst der Umfangsrand der Glasscheibe mit einem fettlösenden Lösungsmittel gereinigt. Anschließend wird eine erste Schicht 3 eines vulkanisierbaren Primers auf den Scheibenrand 1 und anschließend ein weiteres vulkanisierbares Bindemittel 4 aufgebracht. Unter vulkanisierbaren Primer versteht man dabei einen mit Schwefel reagierenden Primer, der vulkanisierbar ist.

Anschließend wird der Glas-Nutausschnitt 5 des vorvulkanisierten Elastomer-Rahmens 2 aufgerauht und auf diesen Nutausschnitt 5 eine Schicht 6 einer vulkanisiebaren Kleberlösung aufgebracht. Diese Kleberlösung besteht dabei zweckmäßigerweise aus einer vulkanisierbaren Kautschuklösung, etwa vom gleichen Material wie das des verwendeten Rahmens. Es ist aber auch möglich, ein anderes Material zu verwenden, das spezielle gute Binde- und Hafteigenschaften zum verwendeten Glasprimer aufweist.

Nach Ablüften des Klebers wird die Glasscheibe 1 in den Nutausschnitt 5 des Rahmens 2 eingesetzt und dieser Rahmen 2, zusammen mit der Glasscheibe 1, unter erhöhtem Druck ausvulkanisiert. Die Vulkanisation erfolgt zweckmäßigerweise bei einer Temperatur von 160°C und einem Druck von 5 - 6 bar, wobei zusätzlich noch Glasscheibe 1 und Rahmen 2 über mechanische Hilfsmittel miteinander verspannt sind, um eine sichere Anfangshaftung zu gewährleisten.

Nach Abschluß der Vulkanisation ergibt sich eine feste und dauerhafte Verbindung zwischen Glasscheibe und Rahmen, so daß Rahmen und Scheibe anschließend als integrales Bauteil unmittelbar in das zu bestückende Kraftfahrzeug eingesetzt werden können.

Bei dem in der Zeichnung dargestellten Ausführungsbeispiel nach Fig. 3 ist die Glasscheibe 1 in eine Aussparung 5 des Profils 3 eingesetzt. Das gleiche Verfahren ist jedoch auch anwendbar, wenn der Rand der Scheibe 1 noch von einer dünnen Außenlippe 7 des Profils 2 umfaßt wird, wie das in Fig. 4 gezeigt ist, wobei diese Außenlippe 7 allein aber nicht ausreichend zur Halterung der Scheibe 1 wäre. Gleichzeitig ist hierbei die Möglichkeit eines Toleranzausgleiches angegeben, da das vorgefertigte Profil 2 und die Scheibe 1 entsprechend ihrem endgültigen Fertigungsmaß vorliegen.

Hierbei können dann entsprechende Toleranzen mit dem vulkanisierbaren Kleber 6 ausgefüllt werden, wie das auch bei dem Profil nach Fig. 3 möglich ist. Zweckmäßigerweise wird dazu der vorbehandelte Rahmen 2 in einer entsprechenden Vorrichtung maßhaltig positioniert und die Scheibe 1 dann schwimmend in die Nut 5 eingelegt. Ein verbleibender Spalt 11 kann dann mit der Klebermasse ausgefüllt werden.

　　　　　　　　　　　　　　　　　**0163194**

METZELER KAUTSCHUK GMBH 　　　　München, den 8.5.1985
　　　　　　　　　　　　　　　　　Unser Zeichen: MK 344 P 84 EP

Patentansprüche

1. Verfahren zum dauerhaften Konfektionieren einer Glasscheibe, insbesondere einer Front- oder Heckscheibe für Kraftfahrzeuge, auf die Außenseite eines Rahmens aus elastomerem Material, gekennzeichnet durch folgende Verfahrensschritte:

a) Reinigen des Umfangsrandes der Glasscheibe mit einem fettlösenden Lösungsmittel;

b) Aufbringen eines vulkanisierbaren Primers auf den Scheibenrand;

c) Aufbringen eines weiteren vulkanisierbaren Bindemittels auf den Scheibenrand;

d) Aufrauhen des Glas-Nutausschnittes des vorvulkanisierten Elastomer-Rahmens;

e) Aufbringen einer vulkanisierbaren Kleberlösung auf den Glas-Nutausschnitt;

f) paßgenaues Zusammenfügen von Rahmen und Glasscheibe;

g) Ausvulkanisieren des Rahmens mit eingesetzter Glasscheibe unter erhöhtem Druck.

2. Verfahren nach Anspruch 1 dadurch gekennzeichnet, daß die vulkanisierbare Kleberlösung aus einer Kautschuklösung gleichen Materials wie das des Rahmens besteht.

3. Verfahren nach Anspruch 1 dadurch gekennzeichnet, daß die Vulkanisation des konfektionierten Rahmens unter einem Druck von 5 - 6 bar erfolgt.

4. Verfahren nach Anspruch 1 und 3 dadurch gekennzeichnet, daß Rahmen und Glasscheibe zusätzlich gegeneinander verspannt werden.

5. Verfahren nach einem der Ansprüche 1 - 4, dadurch gekennzeichnet, daß Toleranzspalte mit der vulkanisierbaren Kleberlösung ausgefüllt werden.

## FIG.1

## FIG.2

## FIG.3

## FIG.4